# NEW EUROPEAN PATENT SPECIFICATION

(11) **EP 0 189 826 B2**
(45) Date of publication and mention of the opposition decision: **10.03.1993**
(45) Mention of the grant of the patent: 04.10.1989
(21) Application number: 86100743.3
(22) Date of filing: 21.01.1986
(51) Int. Cl.: B29D 30/52

(54) **Tire retreading method, including removal and replacement of steel belted plies**
Verfahren zum Runderneuern von Reifen, einschliesslich Entfernen und Ersetzen der Stahlgürtel
Procédé de rechapage des pneus comprenant l'enlèvement et le remplacement des bandes renforcées d'acier

(30) Priority: 31.01.1985 US 696983
(43) Date of publication of application: 06.08.1986
(73) Proprietor: Bandag Licensing Corporation, Muscatine, Iowa 52761 (US)
(72) Inventor: Lacy, Floyd Andrew, Muscatine Iowa 52761 (US); Schnedler, Gary Wayne, Letts Iowa 52754 (US); Graves, Thomas Wayne, Muscatine Iowa 52761 (US); Sorenson, Billy Lee, Muscatine Iowa 52761 (US)
(74) Representative: Patentanwälte Wenzel & Kalkoff

(56) References cited:
- EP-A- 47 711
- AT-B- 197 705
- DE-A- 2 713 124
- DE-U-18 408 07
- US-A- 3 472 714
- US-A- 3 841 376
- US-A- 4 218 277
- Eidestättige Erklärung des Herrn Lewisch
- Eidesstättige Erklärung des Herrn Ouschan
- K.A. Yarwood, Recent Developments in Retreading, Progress in Rubber Technology, Vol. 43, 1980, pages 111-119
- Bandag-leaflet "Cold Process Topcapping", Form Nr. WL 7249, including a German translation and a letter of Bandag of 7. Okt. 1960
- Publication in the magazine "Der Spiegel" of 20. March 1978, 27. March 1978, 3.April 1978 and 10. April 1978
- Press information of the company Vergölst of 19/20. March 1984
- Vergölst-Manufacturing-Instruction "Gürtelerneuerung" of 04.08.83 and 25.09.84
- Bandag Instruction Manual "Belt Removal Procedure", German Text, 7/83, pages 8-17
- Documents of the company Collmann GmbH & Co: - Offer Nr.0182, Nov. 1974 -Offer Nr. 0182, Jan. 1985 -Figures and desccription of the "Collmannn Stahlgürtel" device, Type 0182

## Description

This invention relates generally, as indicated, to the removal and replacement of steel belts from radial constructed tires with removal of the protector ply and one of the working belts. The tire cost for users of large amounts of tires can be greatly reduced and controlled if tire casings formerly rejected for retreading can be retreaded to extend their life.

Steel belted radial tires have extended the useful life of tires. However, these casings can become damaged during use in such manners as punctures, chunkout, braking, causing spotwearand exposure of the belts to moisture. Excessive wear of the tire for whatever reason can expose the top protector ply to moisture and can destroy its effectiveness in the casing structure.

The problems experienced with repairing these types of injuries are complicated by maintining the integrity of the casing while removing the belts and retaining the integrity of the casing structure while retreading. The requirement of retaining the casing structure has created some applications where section molding is required and the size and number of equipment required was excessive and would not permit economical retreading of such equipment.

The present invention covers a method of removing the protector steel belted ply and one of the working steel belted plies while maintaining the integrity of the casing and permitting a more thorough inspection of the remaining working belts to determine that they are not so damaged as to preclude the safe retreading of the tire casing.

The invention also includes a method of applying replacement belts to replace the removed working belt and the protector ply and producing a casing ready for retreading using standard equipment presently available in the commercial market.

The method according to the invention is defined in the accompanying claims 1 to 4. The main claim comprises the method steps a) to z) which follow a general remark as to the field of invention. By a public prior use a method for the removal and replacement of steel belts from radial constructed tyres is known which comprises as known features the steps a), b) and d) to v). The step. c) is known from this prior use as for as the locating of the width and depth of the belts to be removed is concerned. From the U.S. Patent 3,841,376 also some of the steps a) to z) are known, but in this patent specification no removal of a working belt is taught, but only the replacement of a protector belt.

Claim 3 of the accompanying claims refers to the preparation of a carcass assembly ready for the heat and pressure treatment in an autoclave. The method steps a) and b) are generally known in the business and also the inflating of the curing tube and of the curing chamber, i.e. the method steps c) and d), are known as general steps without reference to the claimed features.

The integrity of the tire casing to be retreaded is maintained by a support means around the circumference of the tire casing to give support to the tire casing assembly during curing so that the radial tire casing will be cured in an appropriate configuration. Most preferably, the support means is a steel curing band which is tensioned by three pressure means.

The invention, accordingly, comprises the structures and methods hereinafter described. The scope of the invention being indicated in the following claims.

In the accompanying drawings in which various embodiments of the invention are illustrated:
Figure 1 illustrates a typical radial tire in a side view.
Figure 2 illustrates the principal elements of a buffing machine showing the mounting of a tire in relative position to the various elements during the buffing procedure.
Figure 3 is a perspective view showing the typical structure of a radial ply tire.
Figure 4 is a cross-sectional view illustrating the structure of the radial tire and the relative locations of the various belt plies.
Figure 5 is a side perspective view showing a radial tire as it would appear mounted on a buffing machine illustrating the cross skives locating the belt plies to be removed.
Figure 6 is a side perspective view of the relationship of buffing rasp illustrating the relative movement of the buffer rasp and the tire casing during the buffing operation on the first side of the tire casing.
Figure 7 is a side perspective view of the relationship of buffing rasp, similar to Figure 6, illustrating the relative movement of the buffer rasp and the tire casing during the buffing operation on the second side of the tire casing.
Figure 8 is a cross-sectional view of a typical tire after the ends of the protector belt ply have been buffed so the tire is now in condition to have the protector belt ply removed.
Figure 9 is a plan view of a double-edge knife used to remove the belt plies in conformity with the principals of the present invention.
Figure 10 is a side view of a double-edge knife used to remove the belt plies in conformity with the principals of the present invention.
Figure 10a is an enlarged view showing the tip of one of the ends of the belt removal knife.
Figure 11 is a cross-sectional view showing the relative location of the ply members with the belt knife initiating separation of the top belt ply in the initial stages of removal.
Figure 12 is a cross-sectional view similar to Figure 11 showing the belt removal knife at a reduced angle to separate the belt from the casing just past the mid-point of the tire casing.
Figure 13 is a similar view to Figure 11 showing the other end of the belt removal knife initiating separation of the edge portion of the top ply from the tire casing.
Figure 14 is similar to Figure 12 and shows the knife at a reduced angle extending across the tire casing to completely separate the top belt ply from the tire casing.
Figure 15 is an illustration of the first step in rebuilding a tire casing after the top two belt plies have been removed, including applying wedge stock to the shoulder area and stitching it down.
Figure 16 is similar to Figure 15 showing the wedge stocks in place and the belt stock being positioned on the buffed surface between the two wedge stocks.
Figure 17 is a cross-sectional view similar to Figure 16 with the top belt and wedge stocks being applied to show the tire in partial reconstructed condition.
Figure 18 is a view similar to Figure 17 where the cushion gum and the precured tread material have been placed on the tire casing, placing the tire in condition for curing to complete the retreading procedure.
Figure 19 is a cross-sectional view illustrating a tire casing that has been placed in condition with the tire reconstructed and in condition for retreading where a curing envelope has been put over the tire assembly in the normal manner and a curing band has been placed over the outer peripheral of the tire to hold the tire in a curing position until the strength is put back into the tire casing during the curing operation.
Figure 20 is a side elevational view of a curing band.
Figure 21 is an elevational view of the curing band showing securing means in the present application.
Figure 22 is a cross-sectional view showing the cross-section of the curing band.
Figure 23 is a cross-sectional view similar to Figure 19 showing the tire assembly, which has been prepared for retreading, mounted on a curing rim in a normally practiced manner in the retreading industry
Figure 24 is a pre-assembled belt assembly which is precured for application in the rebelting process.
Figure 25 is a pre-assembled belt assembly where the portions of the belt are uncured.
Figure 26 is a top plan view of pre-assembled belt assembly illustrating the belts shown in Figures 24 and 25.
Figure 27 is a cross-sectional view of a steel belted radial tire similar to Figure 8, however showing the tire in condition having located the second ply so the first two plies can be removed in the same step.
Figure 28 is a cross-sectional view showing the belt illustrated in Figure 23 afterthe top two belts have been removed in a similar condition as disclosed in Figure 15 before the wedge stocks have been applied.

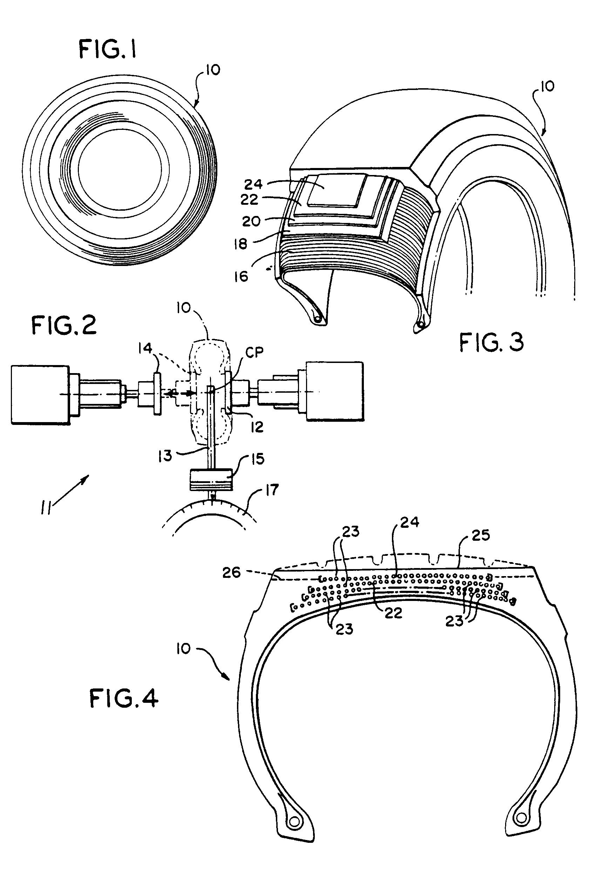

Referring now to the drawings, a radial tire is generally indicated by reference number 10. The elements of a buffing machine 11 are illustrated in Figure 2. The radial tire 10 will be mounted for buffing on the hubs 12 and 14 of the buffing machine 11. Hub 12 is mounted on the stationary side of the machine and hub 14 is mounted on the movable side. The buffing rasp 15 is mounted on pedestal 13 on the machine 11 so as to move in a radius, from a center point CP, about the outer surface of the tire 10. This is all standard equipment in the retreading industry.

Figure 3 illustrates a typical radial tire construction. The radial tire 10 has a radial body ply indicated by 16, a transitional belt 18, a working belt 20, a working belt 22, and a protector ply or belt 24. All the belts have angular cables 23, each belt has their angular cables running in the opposite directions of their adjacent belts.

After the tire has been inspected and it is determined that it needs belts removed and replaced before retreading, the radial tire 10 is mounted on the buffing machine 11 and is inflated to a pressure of 0.55-0.69 bar (8-10 psi) for buffing. The tire 10 is initially buffed to the bottom of tread grooves to form a buffed surface 25 as shown in Figure 4.

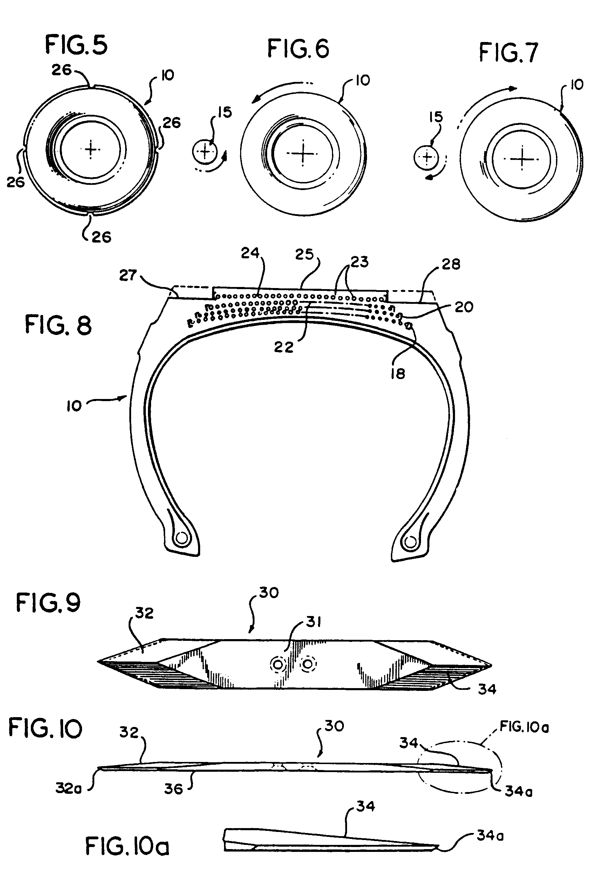

The tire 10 should have four pivot skives 26 extended across the tire, by a hand tool not shown, to locate the protector ply 24. The skives 26 should be spaced evenly around the outer surface of the tire 10, as illustrated in Figure 5. The initial skives 26 locate the depth and width of protector ply 24. The surface of the tire 10 is then buffed down to within approximately 6.3 mm (3/32") of the protector ply 24.

The rasp 15 will then be set at angle of 5° on the pedestal 13, shown on the pedestal angle indicator 17, to buff the shoulders of the tire 10 to expose the edges of the protector ply 24 around the total circumference of the tire. The tire 10 and the rasp 15 should be rotated in the opposite direction when buffing each of shoulder areas, as illustrated in Figure 6 and 7. The buffing rasp 15 is rotated into the belt with the direction of the cables 23 in the belt 24 and the tire is rotated in the opposite direction of the rasp 15 to limit the contact between the rasp blades and the cables.

Referring to Figure 8, the rasp tool 15 will first buff the tire 10 on the side of the tire adjacent to hub 14 and will form buff surface 27 which goes from the outer sidewall of tire 10 to the tips of the steel cables 23 of the protector ply 24. The rasp 15 will then be moved back and will be adjusted to the other side having the pedestal angle indicator 17 set to 5° on the opposite side. The rasp tool 15 will then buff the side of the tire adjacent to the hub 12, removing the tread material, forming a buff surface 28 and exposing the tips of the steel cables 23 of protector ply 24. The buff rasp 15 is moved to a retracted position.

Referring generally to Figures 9, 10, and 10A, there is disclosed a dual belt removal knife 30 which has a front side 31 and cutting ends 32 and 34. The knife 30 has a bottom side 36 which is parallel with the front side 31. Referring to Figure 10A, there is a slight undercut under the tip of cutting end 34 indicated as 34A. There is a similar undercut cutting surface 32A associated with the cutting end 32. Knife 30 is thin and is mounted on the pedestal and can be moved similar to the rasp 15 when mounted on pedestal 13.

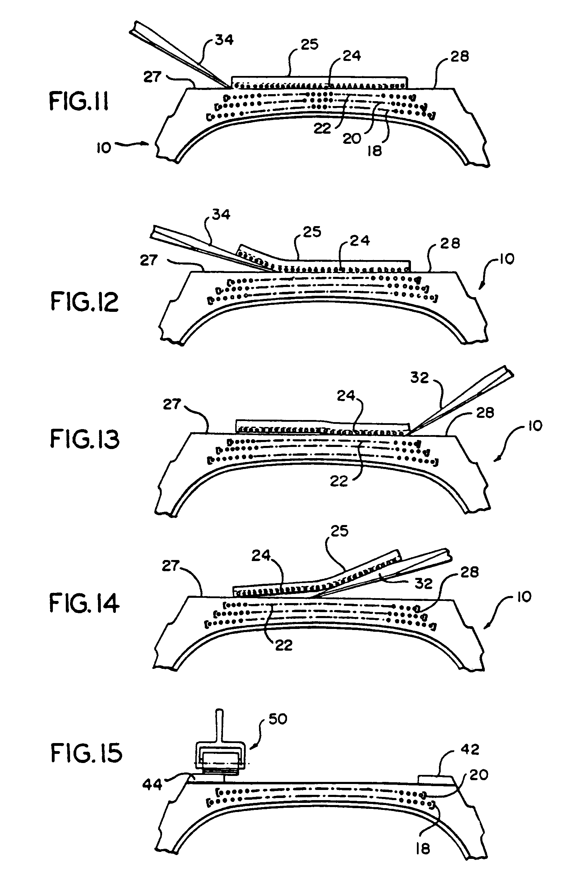

Referring now to Figures 11, 12, 13 and 14, the duel belt removal knife 30 is mounted on the pedestal 13 (not shown) and the tire 10 pressure will be reduced below 0.35 bar (5 psi). A preferred pressure would be 0-0.2 bar (0-3 psi). The pedestal angle indicator 17 will be set at 15-20° and the initial cutting operation will be performed by cutting edge 34, specifically viewed in Figure 11.

The knife 30 will be moved into position so that the cutting end 34 will start cutting just below the protector ply 24, lifting it away from the tire 10. After the edge of ply 24 has been moved up away from the tire and the knife 30 has extended across the surface approximately 9.53 mm (3/8"), the knife 30 will be held at this position until ply 24 is loose all around the circumference of the tire 10. The knife 30 will then be removed from underneath the belt and the pedestal angle indicator 17 will be changed to the 10-15° setting. Knife 30 is reinserted under the protector ply 24. The knife 30 will be fed across the tire surface until it is moved past the middle of the crown of the tire, as viewed in Figure 12.

The knife 30 is retracted and the pedestal angle indicator 17 will be reset to 15-20° for the movement of the knife 30 from the opposite side so that cutting end 32 will act similar to the above-described for edge 34 along the buff surface 28. After the protector ply 24 has had knife 30 extended approximately 9.53 mm (3/8") under the ply 24, the knife 30 will be retained there until it is loose all around the circumference of the tire 10. The knife 30 is then retracted so that the pedestal angle indicator 17 will be set to 10-15°. The knife is reinserted to move across the tire until it meets with the cut made on the opposite side.

At this time, the belt has been completely cut away from the tire casing 10 and is completely free for removal. The knife 30 is then backed away from the tire 10 about 12.7 mm (1/2"). The knife will be slowly moved towards the hub 14 so that the belt will be removed from the tire 10. The reason the cuts are in this sequence is so that the belt 24 will be on the movable hub side. Thus, hub 14 can be retracted and the belt removed. The hub 14 is reinserted in the tire 10 and the operation continued.

The tire will be inspected to see the condition of working belt 22. If the tire is in good condition and there is no repair or damage done to the working belt 22, the tire will be recapped in the usual manner or the protector belt 24 will be replaced and the tire rebuilt and retreaded as discussed below. If the indication is that the working belt 22 has some damage, it can be removed in the steps as described above.

First, the cross-skives 26 are made to locate the position of the working belt 22 and then using the rasp 15 to expose the edges of belt 22. Knife 30 will be used to remove the belt 22 in the same manner as protector ply 24 was removed. After the working belt 22 has been removed, the tire must be carefully inspected. If there is any further rust in the lower belts, the tire should be rejected. If not, the tire can be prepared for retreading.

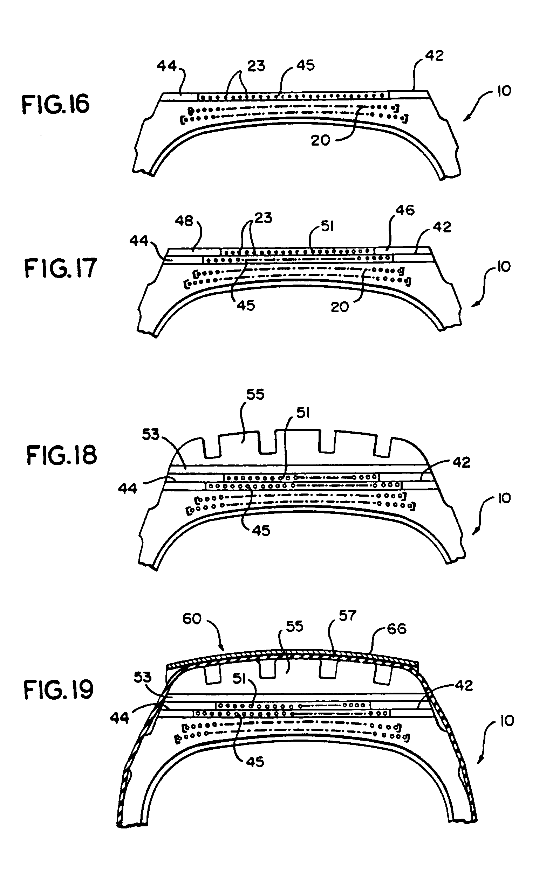

The tire casing will then be removed from the buffing machine 11 and mounted on a belt replacement builder (not shown). The tire will be inflated to no more than 0.55 bar (8 psi). Unvulcanized rubber will be applied to the edges as shoulder strippings 42 and 44, as shown in Figure 15. The shoulder strippings will be stitched starting from the inside to the adjacent sidewall of the tire 10 by a hand-stitcher, as shown in Figure 15 and identified by numeral 50. After the shoulder strippings 42 and 44 are in place, then an uncured steel belt 45 with angular steel cables 23 will be placed in the middle of the tire extending around the peripheral surface and making contact with the shoulder stripping 42 and 44, as shown in Figure 16. The angular steel cables 23 of belt 45 will run in the opposite direction of the angular steel cables of belt 20.

The operator will then stitch down the uncured steel belt 45, starting from the center and moving to one side and then the other side until all the air is removed. After the belt 45 is in place, if more shoulder stripping is necessary, the additional stripping will be added to build up to form a smooth surface across the tire.

Wedge stock 46 and 48 will be applied above the shoulder stripping 42 and 44 and extending partly over the uncured steel belt 45. The wedge stock 46 and 48 may extend overthe edge of the tire. If excess rubber is present, it should be trimmed off at this time. The uncured protector ply 51 with angular steel cables 23 will be applied in the middle of the tire by positioning it over the edges of the wedge stock 46 and 48 and over the uncured steel-belt 45. After the second belt 51 has been applied, with its angularsteel cables running in the opposite direction of the angular steel cables for belt 45, additional wedge stock 46 and 48 may need to be applied to bring the present circumferential surface of the tire up to the desired radius. The additional wedge stock 46 and 48 will be abutted to the edge of the uncured stock protector belt 51 and may extend out over the edge of the sidewall. They will be stitched down to remove all the air and the stock will be continually added until there is a smooth surface across the entire tire 10. Any excess material at the sidewalls should be trimmed. The tire 10 will then appear as shown in Figure 17.

The tire 10 is now ready to be measured for tread length and a tape measure will be put around the OD so that the tread to be cut will be the distance around the crown of the circumference of the tire. A layer of cushion gum 53 and precured tread rubber 55 will be applied to the tire casing 10 in the normal manner and stitched to the surface of the tire. The tire 10 will then appear as shown in Figure 18.

The preparation of the tire casing 10 is now complete and a curing envelope 57 is placed over the assembly and a steel curing band 60 is applied over the envelope and acts on the outer surface of the tread 55, holding it in firm contact with the tire casing 10. The tire assembly 10 will then appear as shown in Figure 19.

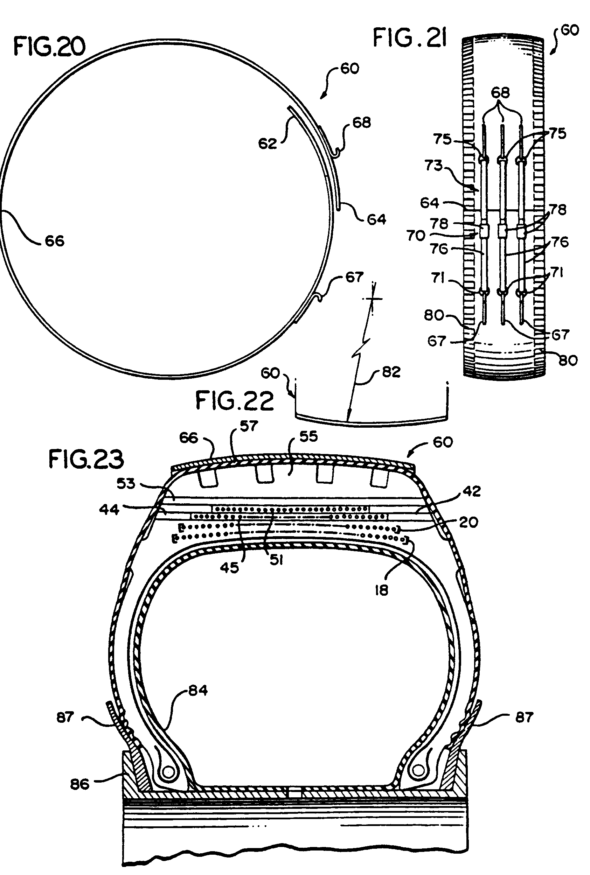

The steel band 60, as shown in Figures 20, 21 and 22, has a unique arc which assists in permitting the tire to conform to a desired configuration during curing, resulting in good road usage for the tire after retreading is completed.

Referring to Figure 20, the curing band 60 has an inner end 62 and an outer end 64 and a main body portion 66. Pressure hooks 67 are located on body 66 to act with the inner end 62 and pressure hooks 68 are located on body 66 to act with the outer end 64.

Ratchet assemblies, shown in Figure 21, are connected to the hooks 67 by ring 71 and strap assemblies 73 are connected to the hooks 68 by ring 75. A strap 76 connects the rings 71 to the ratchet assemblies 70. A strap 77 connects the rings 75 to the ratchet assemblies 70. A ratchet handle 78 can be used to secure the ratchet assembly 70 to the strap 77 and move the strap 77 into the ratchet assembly 70 to move the hooks 67 and 68 towards each other and thus apply the desired pressure onto the tread 55 as seen in Figure 19.

The body portion 66 has crimps 80 around the entire diameter on both sides. The crimps 80 help the curing band 60 hold its form during continued operations of curing. The body portion 66 has an arc as shown in Figure 22 for a 660 nm (26-inch) radius in its preferred embodiment, the radius identified by numeral 82.

The pressure in the tire is inflated to 0.55 bar (8 psi) when the curing band 60 is being installed. The curing band 60 is adjusted to be snug but not be too tight. The tire will then be removed from the tire builder and have a curing tube 84 inserted and then is mounted on a standard curing rim 86 with flanges 87, as viewed in Figure 23. The tire assembly is then inflated to 0.69 bar (10 psi) to await curing.

The tire will be put in a pressurized chamber and the curing temperature will be set at 126.6°C (260°F) and the inflation pressure within the tire curing tube 84 will be 7.9 bar (115 psi) and the pressure within the chamber will be 5.87 bar (85 psi). The estimated curing time after arriving at the temperature will be approximately 4% hours.

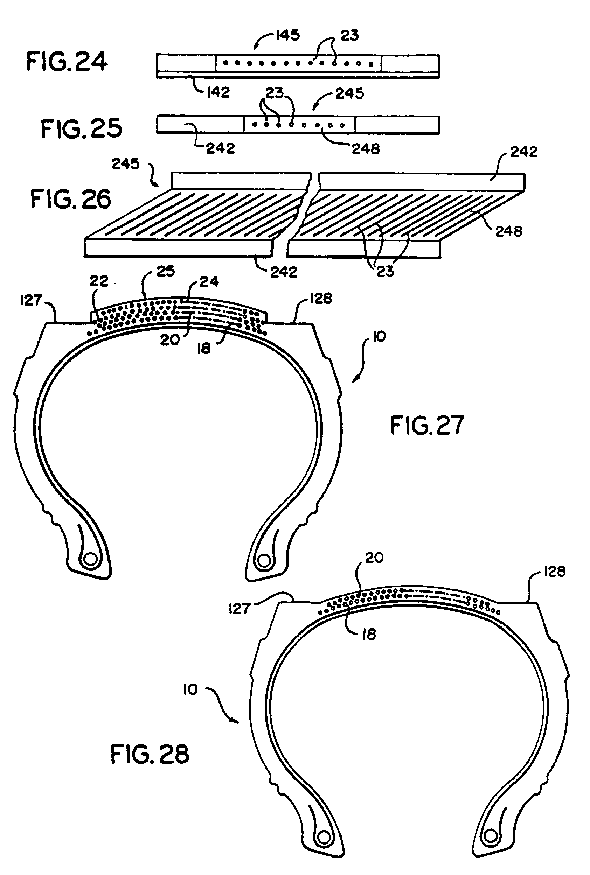

Figure 24 shows a cross-section of a preassembled belt assembly 145 where the assembly is precured. When this material is used, a shim stockcush- ion 142 is required to be placed at the bottom of the belt 145 so that curing can take place as described above.

Figure 25 shows a preassembled belt assembly 245 where the uncured wedge stock 242 is secured to the uncured belts 248. Figure 26 shows a plan view of the assembly 245 with the metal cables running at an angle.

In some application, after the initial inspection, it is determined that the protector ply 24 and the first working belt 22 must be replaced. With this information, the protector ply 24 and the working belt 22 can be removed at the same time. The above-mentioned procedures will be followed with both belts being removed at the same time.

Pivot skives 26 will be extended across the tire as illustrated in Figure 5, with special emphasis made to exposing the edges of working belt 22. The rasp 15 will be operated similar to the operation above to expose the edges of the working ply 22 about the total circumference of the tire 10, as shown in Figure 27. The buffing rasp 15 and the tire 10 will be rotated as discussed above in reference to the working ply 22. The belt removal knife 30 will be mounted on the pedestal 13 and the tire pressure will be reduced to below 0.35 bar (5 psi) and the initial cutting set at 15-20°. The knife 30 will start just below the working ply 22, lifting it away from the tire 10. The knife will extend up approximately 9.35 mm (3/8") under the working ply 22, as stated above. The steps will be followed as described above and the belts 22 and the protector ply 24 removed in unison. The tire 10 will appear as shown in Figure 28. The remainder of the operation will be as described above.

In some occasions, a manufacturer may not have a protector ply 24; therefore, the first working ply 22 will be removed and the tire casing will be prepared as described above. However, only one belt replacement will be made on this structure.

In view of the above, it will be seen that several objects of the invention are achieved and other advantageous results obtained.

As various changes could be made in the above constructions and methods without departing from the scope of the invention, it is intended that all matter contained in the above description or shown in the accompanying drawings should be interpreted as illustrative and not in a limiting sense.

## Claims

1. A method of retreading a radial tire casing (10) by removing a protector belt (24) and a working belt (22) and replacing the removed belts (24, 22) and rebuilding the tire casing (10) into a tire casing assembly for retreading the tire with the use of an envelope comprising:
a) mounting a radial tire casing (10) on a buffing machine (11),
b) buffing the tire casing (10) below the prior tread depth,
c) locating the width and depth of the belts (24, 22) to be removed by forming equally spaced cross-skives (26) across the tire casing (10) to locate the cable edges of the belt (24, 22) to be removed,
d) buffing the tire casing (10) to form first and second buffed side surfaces from the cable edges to the adjacent side of the tire casing (10),
e) mounting a dual belt removal knife (30) with first (32) and second (34) cutting blades on the buffing machine (11),
f) inflating the tire casing to essentially 0 bar during the belt removal operation,
g) setting the first cutting blade (32) of said knife (30) at approximately a 15 to 18° angle in reference to the belt (24,22) to be removed,
h) making a first cut under the first edge of the belt (24, 22) to be removed and moving the knife (30) across the tire casing (10) approximately 9,5 mm (3/8") and holding this location until there is complete separation to this distance,
i) removing said knife (30) from under the belt (24, 22) and resetting said knife at approximately a 10 to 15° angle to the belt to be removed,
j) cutting under the first edge of the belt (24, 22) to be removed and moving across the tire casing (10) past the mid-point of the tire casing,
k) removing the knife (30) from under the belt (24, 22),
I) setting the second cutting blade (34) of said knife (30) at approximately a 15 to 18° angle in reference to the belt (24,22) to be removed, m) making a second cut under the second edge of the belt (24, 22) to be removed and moving the knife (30) across the tire casing
(10) approximately 9,5 mm (3/8") and holding this location until there is complete separation to this distance,
n) removing said knife from under the belt, o) resetting said knife (30) at approximately a 10 to 15° angle to the belt (24, 22) to be removed,
p) cutting under the second edge of the belt (24, 22) to be removed and moving across the tire casing (10) to the first cut,
q) moving the knife (30) away from the tire casing (10) and then continue across the tire casing (10) to remove the belt (24, 22) from the casing,
r) replacing the working belt layer (22) with a new working belt layer (45) having angular metal cables (23),
s) replacing the protector belt layer (24) with a new protector belt layer (51) having angular metal cables (23),
t) placing a layer of cushion gum (53) over the protector belt layer (51),
u) placing a layer of precured tread rubber over the layer of cushion gum (53),
v) placing a curing envelope (57) over the tire casing assembly,
w) placing a support means (60) around the circumference of the tire casing (10) to give support to the tire casing assembly during curing,
x) placing three pressure means (68) across said support means (60),
y) adjusting said pressure means (68) to a snug pressure to act on the circumference of the tire assembly and
z) placing the tire casing assembly in a curing chamber for curing the uncured rubber elements.

2. A method as in claim 1, including
inflating the tire casing (10) to approximately 0,55 to 0,7 bar (8 to 10 psi) during the buffing operation.

3. A method as in claim 1 or 2, including
a) placing a curing tube (84) into the tire casing (10),
b) mounting the tire casing assembly on a curing rim (86),
c) inflating the curing tube (84) to 7,9 bar(115 psi) during curing and
d) inflating the curing chamber to 5,9 bar (85 psi) during curing.

4. A method as in claim 1, including
a) placing the angular metal cables (23) of the new working belt layer (45) in the opposite direction of the metal cables of the belt (20) they are placed over and
b) placing the angular metal cables (23) of the new protector belt layer (51) in the opposite di- i-rection of the metal cables (23) of the new working belt layer (45).

## Patentansprüche

1. Verfahren zur Runderneuerung einer Radialreifenkarkasse (10) durch Entfernen eines Protektorgürtels (24) und eines Unterbaugürtels (22) und Ersetzen der entfernten Gürtel (24, 22) und Neuaufbauen der Reifenkarkasse (10) zu einem Karkassenaufbau für das Erneuern des Reifens unter Benutzung einer Hülle, mit den Schritten:
a) Aufziehen einer Radialreifenkarkasse (10) auf eine Abrauhmaschine (11),
b) Abarbeiten der Reifenkarkasse (10) bis unter die bisherige Profiltiefe,
c) Festlegen der Breite und der Tiefe der Gürtel (24, 22), die entfernt werden sollen, durch Anlegen von Querrillen (26) in gleichmäßigen Abständen quer über die Reifenkarkasse (10), um die Drahtränderdes zu entfernenden Gürtels (24, 22) festzustellen,
d) Abrauhen der Reifenkarkasse (10) in der Weise, daß eine erste und zweite abgerauhte Seitenfläche von den Drahträndern bis zu der benachbarten Flanke der Reifenkarkasse (10) entstehen,
e) Einbauen eines Doppelmessers (30) zur Entfernung des Gürtels mit ersten (32) und zweiten (34) Schneidblättern in die Abrauhmaschine (11),
f) Aufblasen der Reifenkarkasse (10) auf im wesentlichen 0 bar während der Gürtelentfernungsoperation,
g) Einstellen der ersten Schneidklinge (32) des Messers (30) unter einem Winkel von ungefähr 15 bis 18° im Vergleich zu dem zu entfernenden Gürtel (24, 22),
h) Durchführen eines ersten Schnittes unter der ersten Kante des zu entfernenden Gürtels (24, 22) und Führen des Messers (30) quer über die Reifenkarkasse (10) um eine Strecke von ungefähr 9,53 mm (3/8") und Beibehalten dieser Stellung, bis in dieser Tiefe eine komplette Trennung stattgefunden hat,
i) Hervorziehen des Messers (30) unter dem Gürtel (24, 22) und Neueinstellen des Messers unter einem Winkel von ungefähr 10 bis 15° zu dem zu entfernenden Gürtel,
j) Schneiden unter der ersten Kante des zu entfernenden Gürtels (24, 22) und Führen des Messers quer über die Reifenkarkasse (10) bis über den Mittelpunkt der Reifenkarkasse hinaus,
k) Hervorziehen des Messers (30) unter dem Gürtel (24, 22),
I) Einstellen der zweiten Schneidklinge (34) des Messers (30) unter einem Winkel von etwa 15 bis 18° im Vergleich zu dem zu entfernenden Gürtel (24, 22),
m) Durchführen eines zweiten Schnittes unter der zweiten Kante des zu entfernenden Gürtels (24, 22) und Bewegen des Messers (30) quer über die Reifenkarkasse (10) um circa 9,53 mm (3/8") und Beibehalten dieser Stellung, bis in dieser Tiefe die vollständige Ablösung eintritt,
n) Entfernen des Messers (30) unter dem Gürtel hervor,
o) Neueinstellen des Messers (30) unter einem Winkel von ungefähr 10 bis 15° zu dem zu entfernenden Gürtel (24, 22),
p) Schneiden unter der zweiten Kante des zu entfernenden Gürtels (24, 22) und Bewegen des Messers quer über die Reifenkarkasse
(10) bis zu dem ersten Schnitt,
q) Bewegen des Messers (30) weg von der Reifenkarkasse (10) und anschließendes Weiterführen quer über die Reifenkarkasse (10), um den Gürtel (24, 22) von der Karkasse abzulösen,
r) Ersetzen der Unterbaugürtelschicht (22) durch eine neue Unterbaugürtelschicht (45) mit winkeligen Metalldrähten (23),
s) Ersetzen der Protektorgürtelschicht (24) mit einer neuen Protektorgürtelschicht (51) mit winkeligen Metalldrähten (23),
t) Auflegen einer Schicht aus Bindegummi (53) über die Protektorgürtelschicht (51), u) Auflegen einer Schicht aus vulkanisiertem Laufstreifengummi über die Bindegummischicht (53),
v) Auflegen einer Vulkanisierhülle (57) über den Reifenkarkassenaufbau,
w) Auflegen von Stützmitteln (60) um den Umfang der Reifenkarkasse (10), um dem Reifenkarkassenaufbau während des Ausvulkanisierens eine Stütze zu geben,
x) Herumlegen von drei Druckmitteln (68) quer über die Stützmittel (60),
y) Einstellen der Druckmittel (68) auf einen Schmiegedruck, der auf den Umfang des Reifenaufbaus wirkt, und
z) Eingeben des Reifenkarkassenrohlings in eine Vulkanisierkammer zum Ausvulkanisieren der unvulkanisierten Gummielemente.

2. Ein Verfahren nach Anspruch 1 mit dem weiteren Schritt:
Aufblasen der Reifenkarkasse (10) auf etwa 0,55 bis 0,7 bar (8 bis 10 psi) während der Abrauhoperation.

3. Ein Verfahren nach Anspruch 1 oder 2 mit den weiteren Schritten:
a) Einlegen eines Stützschlauches (84) in die Reifenkarkasse (10),
b) Aufziehen des Reifenkarkassenaufbaus auf eine Vulkanisierfelge (86),
c) Aufblasen des Stützschlauches (84) auf 7,9 bar (115 psi) während des Vulkanisierens und
d) Unterdrucksetzen der Vulkanisierkammer auf 5,9 bar (85 psi) während des Ausvulkanisierens.

4. Ein Verfahren nach Anspruch 1 mit den weiteren Schritten:
a) Auflegen der winkeligen Metalldrähte (23) der neuen Unterbaugürtelschicht (45) in entgegengesetzter Richtung zu den Metalldrähten des Gürtels (20), über den sie gelegt sind, und
b) Auflegen der winkeligen Metalldrähte (23) der neuen Protektorgürtelschicht (51) in entgegengesetzter Richtung zu den Metalldrähten (23) der neuen Unterbaugürtelschicht (45).

## Revendications

1. Procédé de rechapage d'un pneu à carcasse radiale (10) à l'aide d'un enveloppe de vulcanisation comprenant l'enlèvement d'une bande de protection (24) et d'une bande de fonction (22) et le remplacement des bandes (22, 24) enlevées et la reformation de la carcasse du pneu (10) en un assemblage de carcasse de pneu pour rechaper le pneu, comprenant:
a) le montage d'une carcasse radiale de pneu (10) sur une machine de décolletage (11),
b) le décolletage de la carcasse (10) du pneu au-dessous de la profondeur initiale de la sculpture du pneu,
c) la localisation de la largeur et de la profondeur des bandes (24, 22) à enlever par la formation de fines bandelettes (26) entrecroisées, espacées de manière égale, sur la carcasse du pneu (10), pour localiser les arêtes des fils de la bande à enlever,
d) le décolletage de la carcasse du pneu (10) pour former les premièrs et secondes surfaces latérales décolletées depuis les arêtes des fils jusqu'au côté adjacent de la carcasse du pneu (10),
e) le montage d'un couteau double (30) pour enlever les bandes avec des premières lames (32) et des secondes lames (34) sur la machine à décolleter (11),
f) le gonflement de la carcasse du pneu (10) à essentiellement 0 bar pendant l'opération d' enlèvement de la bande,
g) la pose de la première lame (32) dudit couteau (30) à un angle d'environ 15 à 18° par rapport à la bande (24, 22) à enlever,
h) une première coupe au-dessous de la première arête de la bande (24, 22) à enlever, le déplacement du couteau (30) sur la carcasse du pneu (10) d' environ 9,53 mm (3/8") et le maintien à cet endroit jusqu'à ce qu'il y ait séparation complète à cette distance,
i) de retrait dudit couteau (30) de dessous la bande (24, 22) et la remise en place dudit couteau à un angle d'environ 10 à 15° par rapport à la bande à enlever,
j) la coupe au-dessous de la première arête de la bande (24, 22) à enlever et le déplacement à travers la carcasse du pneu (10) au-delà du point central de la carcasse du pneu,
k) le retrait du couteau (30) de dessous la bande (24, 22),
I) la pose de la seconde lame (34) dudit couteau (30) à un angle d'environ 15 à 18° par rapport à la bande (24, 22) à enlever,
m) une second coupe au-dessous de la seconde arête de la bande (24, 22) à enlever, le déplacement du couteau (30) sur la carcasse du pneu (10) d' environ 9,53 mm (3/8") et le maintien à cet endroit jusqu'à ce qu'il y ait séparation complète à cette distance,
n) le retrait dudit couteau (30) de dessous la bande,
o) la remise en place dudit couteau (30) à un angle d'environ 10 à 15° par rapport à la bande à enlever,
p) la coupe au-dessous de la second arête de la bande (24, 22) à enlever, le déplacement à travers la carcasse (10) vers la première coupe,
q) le retrait du couteau (30) de la carcasse du pneu (10) et ensuite la poursuite à travers la carcasse du pneu (10) pour enlever la bande (24, 22) de la carcasse,
r) le remplacement de la bande de fonction (22) par une nouvelle bande de fonction (45) ayant des fils métalliques angulaires (23), s) le remplacement de la bande de protection (24) par une nouvelle bande de protection (51) ayant des fils métalliques angulaires (23),
t) la mise en place d'une couche amortissante en caoutchouc (53) sur la bande de protection (51),
u) la mise en place d'une couche de caoutchouc de roulement prédurcie sur la couche amortissante en caoutchouc (53),
v) la mise en place d'une enveloppe de vulcanisation (57) sur sur l'assemblage de la carcasse du pneu (10),
w) la mise en place de moyens de support (60) sur la circonférence de la carcasse de pneu (10) pour assurer le soutien de l'assemblage de la carcasse du pneu pendant la vulcanisation,
x) la mise en place de trois moyens de pression (68) sur les moyens de support mentionnés (60),
y) l'ajustage de moyens de pression mentionnés (68) à une pression adéquate pour agir sur la circonférence de l'assemblage du pneu, et
z) la mise en place de l'assemblage de la carcasse du pneu dans une enceinte de vulcanisation pour la vulcanisation des éléments de caoutchouc non vulcanisés.

2. Procédé selon la revendication 1 comprenant:
le gonflement de la carcasse du pneu (10) à 0,55 à 0,7 bar environ (8 à 10 psi) pendant l'opération de décolletage.

3. Procédé selon la revendication 1 ou 2 comprenant:
a) la mise en place d'un tube de vulcanisation (84) dans la carcasse du pneu (10),
b) le montage de l'assemblage de la carcasse du pneu sur une jante de vulcanisation (86),
c) le gonflement du tube de vulcanisation (84) à 7,9 bar (115 psi) pendant la vulcanisation, et
d) le gonflement d l'enceinte de vulcanisation à 5,9 bar (84 psi) pendant la vulcanisation.

4. Procédé selon la revendication 1 comprenant:
a) la mise en place de fils métalliques angulaires (23) de la nouvelle bande de fonction (45) dans le sens opposé des fils métalliques de la bande (20) sur lesquels ils sont posés, et
b) la mise en place de fils métalliques angulaires (23) de la nouvelle bande de protection (51) dans le sens opposé des fils métalliques (23) de la nouvelle bande de fonction (45).
